# EUROPEAN PATENT SPECIFICATION

(11) **EP 2 045 462 B1**
(45) Date of publication and mention of the grant of the patent: **14.12.2011**
(21) Application number: 08253202.9
(22) Date of filing: 01.10.2008
(51) Int. Cl.: F02M 35/024, F02M 35/16, B62J 37/00, B01D 46/00

(54) **Air cleaner for vehicle and vehicle having the air cleaner**
Luftfilter für Fahrzeug und Fahrzeug mit Luftfilter
Filtre à air et véhicule doté de celui-ci

(30) Priority: 03.10.2007 JP 2007259647
(43) Date of publication of application: 08.04.2009
(73) Proprietor: Yamaha Hatsudoki Kabushiki Kaisha, Shizuoka-ken Shizuoka 438-8501 (JP)
(72) Inventor: Nishizawa, Kazuya, Shizuoka-ken 438-8501 (JP); Terumichi, Satoshi, Shizuoka-ken 438-8501 (JP)
(74) Representative: Lamb, Martin John Carstairs

(56) References cited:
- WO-A-00/50152
- DE-A1- 10 347 103
- US-A- 4 799 569

## Description

### FIELD OF THE INVENTION

The present invention relates to an air cleaner for a vehicle, such as a motorcycle, and a vehicle, such as a motorcycle having the air cleaner.

### BACKGROUND TO THE INVENTION

Vehicles such as motorcycles generally have an air cleaner for purifying air to be supplied to an engine (see, for example, JP-A-2004-211661). The air cleaner includes an air cleaner case and an element disposed in the air cleaner case. The air cleaner case is provided with an inlet for introducing air and an outlet for ejecting air. The element is interposed between the inlet and the outlet. An intake pipe is connected to the outlet for introducing air to an engine.

In the air cleaner disclosed in JP-A-2004-211661, the outlet is positioned above the element. An intake opening of the intake pipe opens obliquely downward at a position above the element inside the air cleaner case.

When an air cleaner is kept being used for a long period of time, its element becomes clogged with dust, which deteriorates purification performance. Therefore, the air cleaner requires maintenance such as cleaning or replacement of the element.

In the maintenance of the air cleaner, the element is required to be detached. During detachment of the element, foreign matters attached on the element may fall into the air cleaner case.

As described above, in the air cleaner disclosed in JP-A-2004-211661, the intake opening of the intake pipe opens obliquely downward at a position above the element. Therefore, even if foreign matters fall during the maintenance, the foreign matters do not enter the intake pipe.

However, there are some vehicles in which the intake opening preferably opens upward or obliquely upward at a position below the element (see for example US-4799569). This arrangement may be required to accommodate other components or the structure of the vehicle, for example. With such a construction, however, the foreign matters attached on the element may fall toward the intake pipe during the maintenance of the air cleaner. Accordingly, the foreign matters falling into the intake pipe may shorten a life of an engine, for example.

The present invention has been made in view of the above situation. It is an object of the invention to prevent foreign matters from entering inside an intake pipe even if the foreign matters fall from an element during maintenance in a vehicle in which an intake opening of the intake pipe opens upward or obliquely upward at a position below the element.

Providing an auxiliary filter element is known from DE 103 47 103 A1.

### SUMMARY OF THE INVENTION

According to the present invention there is provided an air cleaner for a vehicle according claim 1.

Accordingly, the main element may be detached and removed while leaving the auxiliary element in place. In this way the auxiliary element advantageously protects the intake opening of the intake pipe from particles and debris and like falling from the main element when being removed.

The auxiliary element may be permanently fixed in the air cleaner case. Alternatively, the auxiliary element may be detachable from the air cleaner case.

The main element hay have a finer element, mesh, filter pore size or the like than the auxiliary element.

At least the main element may be formed in a curved plate or in a bowl shape.

The air cleaner case may have a bottom on which the outlet may be formed. The outlet may be arranged to be connected to the intake pipe such that the intake pipe extends upward above the bottom of the air cleaner case.

A further aspect of the present invention relates to a vehicle comprising an air cleaner according to the previous aspect.

In the vehicle, the air cleaner case may have a bottom on which the outlet is formed, and the intake pipe may extend upward above the bottom in the air case cleaner.

The vehicle may further comprise an engine having a cylinder, wherein the intake pipe extends between the cylinder and the air cleaner case.

The intake pipe may extend obliquely upward from the cylinder to the air cleaner case.

The vehicle may further comprise an exhaust pipe that extends rearward or obliquely rearward from the rear side of the cylinder in the side view. The cylinder may extend upward or obliquely upward rearward in the side view. The intake pipe may extend forward or obliquely forward from the front side of the cylinder in the side view.

The vehicle may be a motorcycle.

The vehicle may be an off-road type.

The vehicle further comprises a pressing member for pressing the main element. The pressing member may be arranged to press the main element within the air cleaner case.

A further aspect of the present invention relates to an air cleaner for a vehicle comprising: an air cleaner case on which an inlet and an outlet are formed, the outlet being connected to an intake pipe having an intake opening that opens upward or obliquely upward toward an inner space of the air cleaner case; a main element attached inside the air cleaner case to be positioned above the intake opening; and an auxiliary element which is attached inside the air cleaner case to be positioned above the intake opening and below the main element and which is separate from the main element, in which the main element is constructed to be detachable from the air cleaner case with the auxiliary element remaining fixed in the air cleaner case.

The air cleaner for a vehicle includes the main element and the auxiliary element, which is separate from the main element and positioned above the intake opening and below the main element. The main element is constructed to be detachable from the air cleaner case with the auxiliary element remaining fixed in the air cleaner case. Therefore, according to the air cleaner described above, even if foreign matters attached on the main element fall off when the main element is detached for maintenance, the foreign matters are captured by the auxiliary element. Thus, it is possible to prevent foreign matters from falling into the intake pipe through the intake opening during the maintenance. Therefore, according to the air cleaner described above, the maintenance work can be facilitated.

A motorcycle according to the present invention includes the air cleaner for a vehicle.

According to the motorcycle, it is possible to prevent foreign matters from entering inside the intake pipe even if the foreign matters fall from the element during maintenance in a vehicle in which the intake opening of the intake pipe opens upward or obliquely upward at a position below the element.

According to the present invention, it is possible to prevent foreign matters from entering inside an intake pipe even if the foreign matters fall from an element during maintenance in a vehicle in which an intake opening of the intake pipe opens upward or obliquely upward at a position below the element.

### BRIEF DESCRIPTION OF THE DRAWINGS

These and other aspects of the present invention will now be described, by way of example only, with reference to the accompanying drawings, in which:
FIG. 1 is a side view of a motorcycle according to a first embodiment;
FIG. 2 is an enlarged side view showing a part of FIG. 1;
FIG. 3 is a sectional view of an air cleaner according to the first embodiment as viewed from the left side;
FIG. 4 is a sectional view of the air cleaner according to the first embodiment as viewed from the front side;
FIG. 5 is an exploded view of the vicinity of the air cleaner as viewed from above in the state that a second case member of the air cleaner according to the first embodiment is detached;
FIG. 6 is a sectional view of an air cleaner according to a second embodiment as viewed from the left side;
FIG. 7 is an exploded view of the vicinity of the air cleaner as viewed from above in the state that a second case member of the air cleaner according to the second embodiment is detached;
FIG. 8 is a schematic view of an air cleaner according to a third embodiment; and
FIG. 9(a) and 9(b) are schematic views of air cleaners according to modified embodiments.

### DETAILED DESCRIPTION OF THE DRAWINGS

### First embodiment

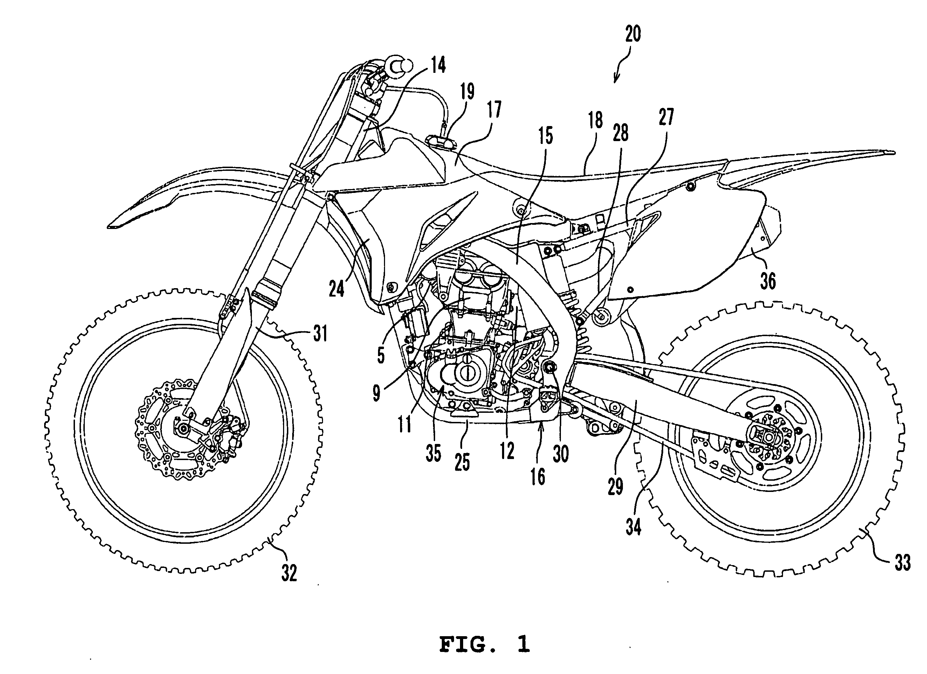

FIG. 1 is a left side view of a motorcycle 20 according to this embodiment. With reference to FIG. 1, a general construction of the motorcycle 20 will be described. In the following description, front, rear, left and right directions are those as viewed from a rider seated on a seat 18.

The motorcycle 20 includes a body frame 16 forming a framework, and a seat 18 on which a rider is to be seated. The motorcycle 20 is a so-called off-road motorcycle. However, a motorcycle according to the present invention is not limited to this, but can be a motorcycle other than an off-road type (such as motorcycle type, scooter type, or so-called moped type motorcycle).

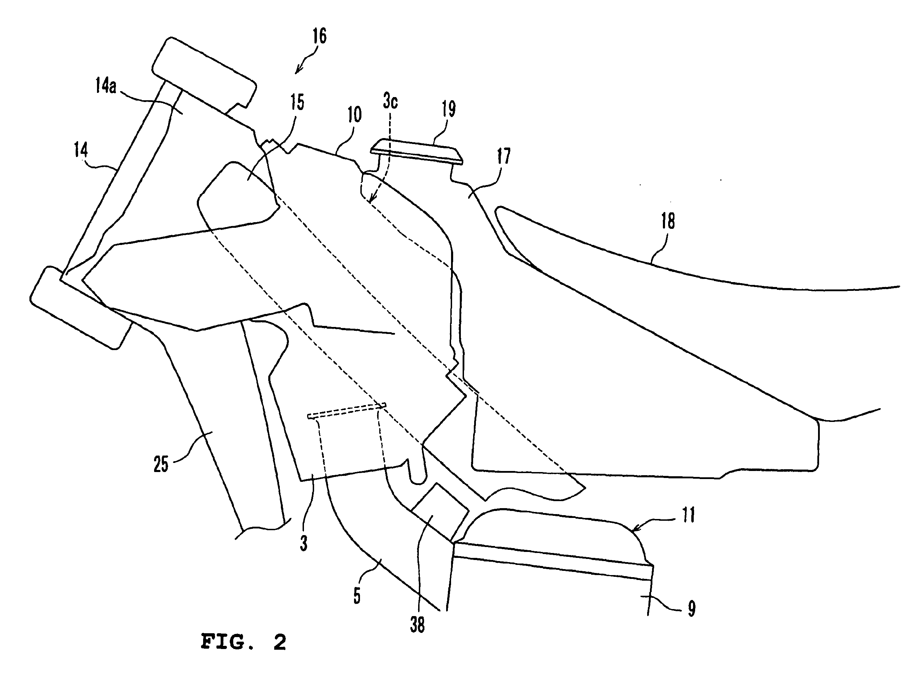

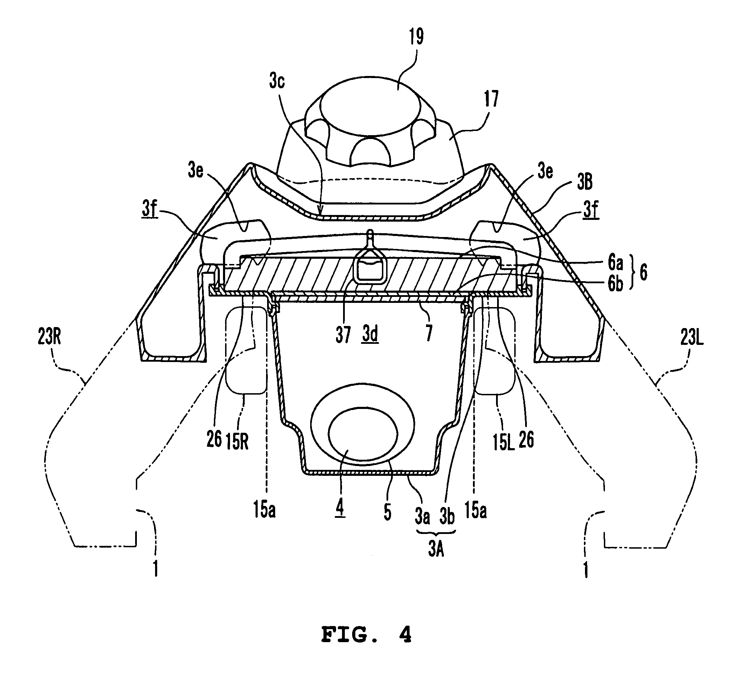

The body frame 16 includes a head pipe 14, a down tube 25, and a main frame 15. As shown in FIG. 2, the down tube 25 extends downward from a bracket 14a of the head pipe 14. On the other hand, the main frame 15 extends rearward from the bracket 14a of the head pipe 14 at a position above the down tube 25. The main frame 15 is constructed with a pair of left and right frame members 15L, 15R (see FIG. 4) that extend rearward from the bracket 14a of the head pipe 14. The main frame 15 extends more downward at its more rearward position.

As shown in FIG. 1, a pair of left and right seat rails 27 are connected to the main frame 15. The seat rails 27 extend rearward. A back stay 28 is connected to the main frame 15 at a position below a part to which the seat rail 27 is connected. Further, a rear arm 29 is coupled to the lower ends of the main frame 15 with a pivot shaft 30 therebetween.

The head pipe 14 is supported by a front fork 31. A front wheel 32 is supported at the lower end of the front fork 31. A rear wheel 33 is supported at the rear end of the rear arm 29. A cover 24 is provided above the body frame 16 to cover the body frame 16. Further, a fuel tank 17 extends between the main frame 15 and the back stay 28 above thereof. The seat 18 is disposed above the fuel tank 17. Specifically, as shown in FIG. 2, a front portion of the seat 18 including at least its front end is positioned above the fuel tank 17. The front portion of the seat 18 including at least its front end is disposed to overlap a rear potion of the fuel tank 17 including at least its rear end as viewed from top.

As shown in FIG. 1, a power unit 35 is disposed between the down tube 25 and the main frame 15 to be attached thereto. The power unit 35 is integrally constituted by an engine 11 for generating driving force, a transmission, and so forth. The power unit 35 is connected to the rear wheel 33 via a power transmission means 34 such as a chain. With this construction, driving force generated by the engine 11 is transmitted to the rear wheel 33 through the power transmission means 34.

The engine 11 has a cylinder 9. The cylinder 9 extends obliquely upward and to the rear in the side view. However, the cylinder 9 may extend upward in the side view. Furthermore, the cylinder 9 may extend obliquely upward and forward in the side view. In this embodiment, the engine 11 is a four-cycle or four-stroke single-cylinder engine. Alternatively, the engine 11 may be a two-cycle or two-stroke engine or may have multiple cylinders.

As shown in FIG. 2, the cylinder 9 is connected to one end of an intake pipe 5. The intake pipe 5 extends obliquely upward from the cylinder 9 in the side view. The intake pipe 5 extends obliquely forward from the front side of the cylinder 9 in the side view. The other end of the intake pipe 5 is connected to an air cleaner case 3 of an air cleaner 10. As described in detail later, the air cleaner 10 passes air to be supplied to the engine 11 to purify the air. Meanwhile, the intake pipe 5 may extend generally horizontally forward from the front side of the cylinder 9. Reference numeral 38 denotes a fuel injection device or a carburetor disposed in the midway of the intake pipe 5 for supplying fuel into the intake pipe 5.

As shown in FIG. 1, one end of an exhaust pipe 12 is connected to the cylinder 9. The exhaust pipe 12 extends obliquely rearward from the rear side of the cylinder 9 in the side view. The other end of the exhaust pipe 12 is connected to a muffler 36. However, the exhaust pipe 12 may alternatively extend generally horizontally rearward from the rear side of the cylinder 9.

The above is a general construction of the motorcycle 20. Next, a construction of the air cleaner 10 according to the present invention will be described in detail.

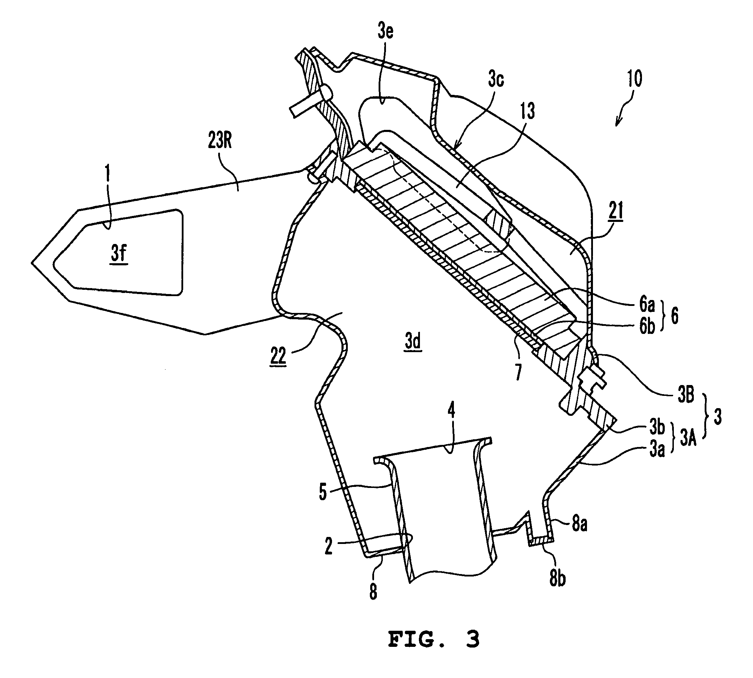

FIG. 3 is a sectional view of the air cleaner 10 as viewed from the left side. FIG. 4 is a sectional view of the air cleaner 10 as viewed from the front side. As shown in FIGS. 3 and 4, the air cleaner 10 has the air cleaner case 3 and an element 6 disposed inside the air cleaner case 3. The air cleaner case 3 includes a first case member 3A, a second case member 3B, and two ducts 23L, 23R (see FIG. 4).

As shown in FIG. 4, the first case member 3A includes a lower section 3a and an upper section 3b. At least a part of the lower section 3a is interposed between the left and the right frame members 15L, 15R. In this embodiment, an upper part of the lower section 3a is interposed between the left and the right frame members 15L, 15R. On the other hand, the upper section 3b protrudes above the left and the right frame members 15L, 15R from the lower section 3a and extends outward in a lateral direction. The upper section 3b has a seal section 26 abutting on and supporting a main element 6a, which will be described later. The seal section 26 is positioned above the left and the right frame members 15L, 15R and at least a part of the seal section 26 is positioned outwardly of inner ends 15a of the left and the right frame members 15L, 15R in the lateral direction.

The second case member 3B covers the first case member 3A from above and is detachably attached to the first case member 3A. The first case member 3A and the second case member 3B form an inner space 3d in the air cleaner case 3 that temporarily reserves air and passes it toward the intake pipe 5.

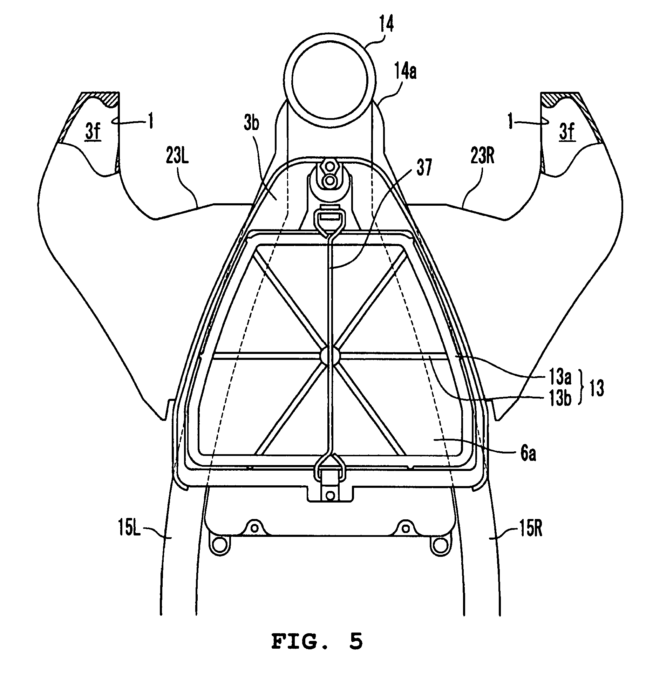

Two openings 3e are formed in the second case member 3B. The openings 3e are formed generally symmetrically in the lateral direction. The ducts 23L, 23R are respectively attached to the two openings 3e. The duct 23L disposed in the left side and the duct 23R disposed in the right side are formed in generally symmetrical shapes. The ducts 23L, 23R respectively extend outward in the lateral direction from the second case member 3B and then curve to further extend forward (see FIG. 5). Inlets 1 for introducing outside air into the ducts 23L, 23R are respectively formed at the front ends of the two ducts 23L, 23R. Inflow passages 3f for introducing the outside air to the inner space 3d are respectively formed in the two ducts 23L, 23R. However, the two openings 3e may not be formed in generally symmetrical positions in the lateral direction. Also, the ducts 23L, 23R may not be formed in generally symmetrical shapes in the lateral direction.

The ducts 23L, 23R are connected to the second case member 3B in such a manner that when the inflow passages 3f are extended toward the inner space 3d side, the inflow passages 3f do not intersect with an upper surface of the element 6. In other words, the ducts 23L, 23R are connected to the second case member 3B in such a manner that when the inflow passages 3f are extended toward the inner space 3d side, the extended portions of the inflow passages 3f extend above the upper surface of the element 6.

As shown in FIG. 3, the lower section 3a of the first case member 3A which forms a part of the inner space 3d has a bottom 8. An outlet 2 for ejecting air out of the inner space 3d is formed in the bottom 8. The intake pipe 5 is connected to the outlet 2. An intake opening 4 is formed in the intake pipe 5 to open obliquely upward in the inner space 3d. However, the intake opening 4 may alternatively open upward. The intake pipe 5 extends above the bottom 8 in to the inner space 3d. Accordingly, the intake opening 4 is positioned above the bottom 8. Alternatively, the intake pipe 5 may be connected to the bottom 8 of the air cleaner case 3 so that the intake opening 4 is generally flush with the bottom 8 of the air cleaner case 3. In this case, the intake opening 4 opens upward or obliquely upward toward the inner space 3d.

At the bottom 8, a drainage section 8a is formed for discharging water when the water by the rainfall or the like collects on the bottom 8. In this embodiment, the drainage section 8a is closed by a lid 8b. With such a construction, dust is prevented from entering through the drainage section 8a into a clean-side chamber 22, which will be described later. Meanwhile, the drainage section 8a may be closed by a sponge or the like instead of the lid 8b. Also, the drainage section 8a may be provided with a backflow prevention device without the lid 8b.

As shown in FIG. 2, at least a part of the air cleaner case 3 is disposed below the fuel tank 17. More specifically, a part of the rear side of the air cleaner case 3 is positioned below a part of the front side of the fuel tank 17. As shown in FIGs. 2 and 4, at least a portion 3c of the air cleaner case 3, which is the part positioned below the fuel tank 17, is dented or formed downward or is concave. Accordingly, at least a part of the fuel tank 17 is positioned over the portion 3c of the air cleaner case 3, which is dented downward. As shown in FIG. 2, the fuel tank 17 is provided with a cap 19 to cover a filler (not shown) opening upward. The cap 19 is positioned above the portion 3c of the air cleaner case 3, which is dented downward.

As shown in FIG. 3, in this embodiment, the element 6 is formed in a plate shape. The element 6 includes a main element 6a and an auxiliary element 6b, which is separate from the main element 6a. Both the main element 6a and the auxiliary element 6b are disposed in the inner space 3d. The element 6 divides the inner space 3d, which is at least a part of the inside of the air cleaner case 3, into upper and lower spaces. More specifically, the element 6 divides the inner space 3d into a dirty-side chamber 21 positioned above the main element 6a and the clean-side chamber 22 positioned below the auxiliary element 6b.

The main element 6a is disposed above the intake opening 4. The main element 6a is supported by the seal section 26 of the upper section 3b of the first case member 3A and thereby sealed around its circumference. On the other hand, the auxiliary element 6b is attached to the upper section 3b so as to be positioned above the intake opening 4 and below the main element 6a. In this embodiment, the main element 6a is constructed to be detachable from the upper section 3b with the auxiliary element 6b remaining attached to the upper section 3b. In other words, the main element 6a is constructed to be detachable from the upper section 3b with the auxiliary element 6b remaining attached in the inner space 3d.

The main element 6a has a finer element than the auxiliary element 6b has. In other words, the auxiliary element 6b has a coarser element than the main element 6a has. However, the main element 6a and the auxiliary element 6b may have an element of the same fineness. Further, the main element 6a may have a coarser element than the auxiliary element 6b has.

A pressing member 13 is disposed above the main element 6a. The pressing member 13 presses the main element 6a downward or obliquely downward. In this embodiment, as shown in FIG. 5, the pressing member 13 includes a frame 13a in a generally trapezoidal shape and six ribs 13b radially extending from the center of the frame 13a. Also, in this embodiment, the pressing member 13 is fixed by a detachable fixing member 37. In FIG. 3, the fixing member 37 is not shown.

Further as shown in FIG. 3, in this embodiment, a flameproof net 7 is disposed under the auxiliary element 6b. The flameproof net 7 extinguishes any flames caused by a backfire (backfire is a phenomenon in which mixture gas to be combusted in the cylinder 9 flows back to the intake pipe 5 and so forth) from the engine 11 and thereby prevents the element 6 from being burned by the flames.

With the above construction, outside air taken from the inlets 1 into the ducts 23L, 23R is introduced to an upper portion (dirty-side chamber 21) in the inner space 3d through the inflow passages 3f. The air further flows from top to bottom (from the dirty-side chamber 21 to the clean-side chamber 22) in the inner space 3d. At this time, the air passes through the main element 6a and the auxiliary element 6b. Dust and the like in the air are captured by the main element 6a as the air passes through the main element 6a. As a result, the air is purified. In this embodiment, the auxiliary element 6b has a coarser element than the main element 6a has. Therefore, dust and the like are mostly captured by the main element 6a but are hardly captured by the auxiliary element 6b. Thus, the air passed through the element 6 flows into the intake pipe 5 through the intake opening 4. The air is then supplied to the cylinder 9 in the engine 11 through the intake pipe 5.

An example of performing maintenance work (replacement, washing or cleaning) of the element 6, which is one of maintenance works of the air cleaner 10, will now be described.

Generally, with normal use, an element of the air cleaner will become clogged with captured dust and becomes dirty, and will thus operate at a reduced purification performance. Consequently, regular replacement is necessary. In the air cleaner 10 according to this embodiment, the element 6 includes the main element 6a and the auxiliary element 6b, which has a coarser element than the main element 6a has. Accordingly, dust so sized as to be captured by the auxiliary element 6b is mostly captured by the main element 6a. As a result, the auxiliary element 6b has less dirt. Therefore, it is possible in the air cleaner 10 to recover the reduced purification performance by replacing, washing or cleaning only the main element 6a when the element 6 is subjected to replacement, washing or cleaning. The maintenance work (replacement, washing or cleaning) of the main element 6a will be described below.

First, the second case member 3B is detached from the first case member 3A. After detaching the second case member 3B, the fixing member 37 for fixing the pressing member 13 is disengaged and the pressing member 13 is detached. Next, the main element 6a is detached from the seal section 26 of the upper section 3b in the first case member 3A. It should be noted that the main element 6a is placed on the seal section 26. Accordingly, the main element 6a can be readily detached by lifting the main element 6a. The main element 6a is constructed to be detachable from the upper section 3b in the first case member 3A with the auxiliary element 6b remaining fixed in the inner space 3d. Accordingly, the auxiliary element 6b remains fixed in the inner space 3d after detaching the main element 6a.

As described above, in the state that the auxiliary element 6b remains fixed in the inner space 3d, a replacement of the main element 6a is then placed on the seal section 26 of the upper section 3b. Or, after washing or cleaning the detached main element 6a, the washed or cleaned main element 6a is replaced on the seal section 26 of the upper section 3b. Following the reverse procedure to that described above, the pressing member 13 and the fixing member 37 are attached. Finally, the second case member 3B to which the ducts 23L, 23R are attached is assembled so as to cover the first case member 3A from above. With the above procedure, it is possible to recover the purification performance of the element 6 by replacing, washing or cleaning the main element 6a. Thus, the maintenance work of the air cleaner 10 is completed.

As described above, in the air cleaner 10 for a vehicle according to the embodiment, the main element 6a and the auxiliary element 6b, which is separate from the main element 6a, are provided. The main element 6a is constructed to be detachable from the air cleaner case 3 with the auxiliary element 6b remaining fixed in the air cleaner case 3. Therefore, according to the air cleaner 10, even if foreign matters attached on the main element 6a fall off when the main element 6a is detached for maintenance, the foreign matters are captured by the auxiliary element 6b. Therefore, in the motorcycle 20 in which the intake opening 4 of the intake pipe 5 opens upward or obliquely upward at a position below the main element 6a, it is possible to prevent foreign matters from falling into the intake pipe 5 through the intake opening 4 during the maintenance of the main element 6a. As a result, according to the air cleaner 10, the maintenance work can be facilitated even though the intake opening 4 opens upward or obliquely upward in the air cleaner 10.

In this embodiment, the main element 6a of the air cleaner 10 has a finer element than the auxiliary element 6b has. Accordingly, dust so sized as to be captured by the auxiliary element 6b is mostly captured by the main element 6a. In other words, air purification is mainly performed by the main element 6a. Therefore, the auxiliary element 6b is hardly clogged with dust and the like. Thus, according to the air cleaner 10, maintenance frequencies of the auxiliary element 6b can be reduced. That is, detachment frequencies of the auxiliary element 6b becomes small. This further reduces the possibility that foreign matters fall into the intake pipe 5.

Incidentally, there is a case that water enters into the main element 6a or the auxiliary element 6b in wet weather or the like. However, in the motorcycle 20, the intake pipe 5 extends above the bottom 8 in the inner space 3d inside the air cleaner case 3. Thus, water flows down along a side face of the air cleaner case 3 to be collected on the bottom 8 of the air cleaner case 3. As a result, according to the motorcycle 20, it is possible to prevent water from falling into the intake pipe 5 through the intake opening 4 even in wet weather or the like. Further, according to the air cleaner 10, the drainage section 8a is provided. This allows water collected on the bottom 8 of the air cleaner case 3 to be smoothly discharged outside. In addition, in this embodiment, the drainage section 8a is closed by the lid 8b. Therefore, it is possible to prevent dust from being sucked from the drainage section 8a into the clean-side chamber 22, which will be described later.

In the motorcycle 20, the intake pipe 5 extends obliquely upward from the cylinder 9 to the air cleaner case 3. Accordingly, in the motorcycle 20, the intake pipe 5 can have a downdraft configuration that is less curved. Therefore, according to the motorcycle 20, an efficient intake pipe 5 can be obtained.

In the motorcycle 20 according to the embodiment, as viewed from a side, the cylinder 9 extends upward obliquely rearward, the exhaust pipe 12 extends obliquely rearward from the rear side of the cylinder 9, and the intake pipe 5 extends obliquely forward from the front side of the cylinder 9. In the thus configured motorcycle 20, since the layout of the air cleaner 10 and the intake pipe 5 is significantly restricted, the above-mentioned effect is remarkably achieved. In other words, the air cleaner 10 according to the embodiment is especially suitable for a motorcycle constructed as described above. The same effect can be obtained in such a motorcycle that the cylinder 9 extends upward, the exhaust pipe 12 extends rearward from the rear side of the cylinder 9, and the intake pipe 5 extends forward from the front side of the cylinder 9 in the side view.

The intake pipe 5 may alternatively extend forward generally horizontally from the front side of the cylinder 9 and the exhaust pipe 12 may extend rearward generally horizontally from the rear side of the cylinder 9. In this case also, the same effect as above can be achieved. Further, the motorcycle according to the present invention is not limited to this. The invention may be applied to a motorcycle in which the intake pipe 5 extends rearward or obliquely rearward from the rear side of the cylinder 9 and the exhaust pipe 12 extends forward or obliquely forward from the front side of the cylinder 9.

The air cleaner 10 according to the embodiment is especially suitable for the off-road motorcycle 20 of this embodiment. Since the off-road motorcycle 20 runs on rough terrain, its air cleaner 10 tends to suck dust and the like. Accordingly, the above effect of the air cleaner 10 can be remarkably achieved on the off-road motorcycle 20.

Further, the motorcycle 20 according to the embodiment includes the pressing member 13 for pressing the main element 6a. Therefore, according to the motorcycle 20, even though the motorcycle 20 runs on rough terrain and is subjected to vibration, the pressing member 13 securely presses the main element 6a. As a result, in the motorcycle 20, the main element 6a can be prevented from dropping off.

### Second Embodiment

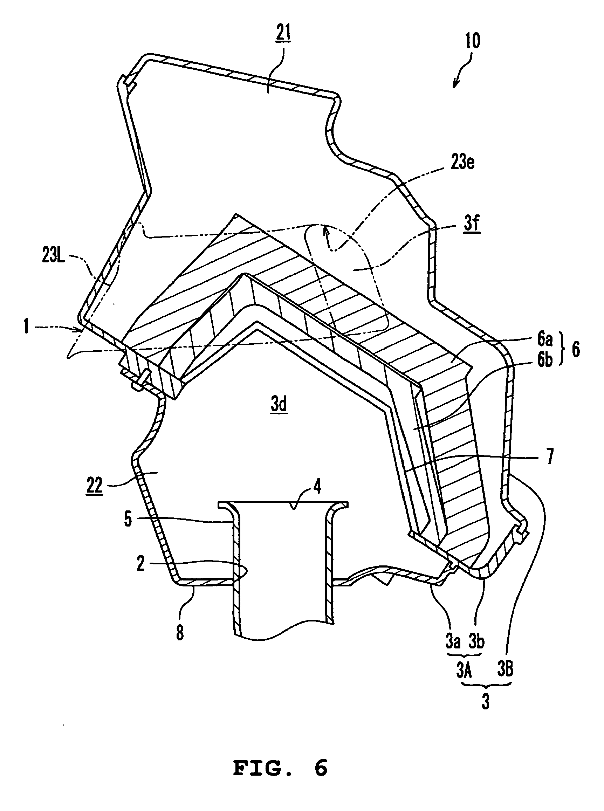

As shown in FIG. 6, in a motorcycle 20 according to a second embodiment, an element 6, which is formed in a plate shape in the first embodiment, is formed in a bowl shape and an air cleaner case 3 is accordingly deformed to fit this shape. A description will be hereinafter made only on the difference in the construction of an air cleaner 10 from the first embodiment.

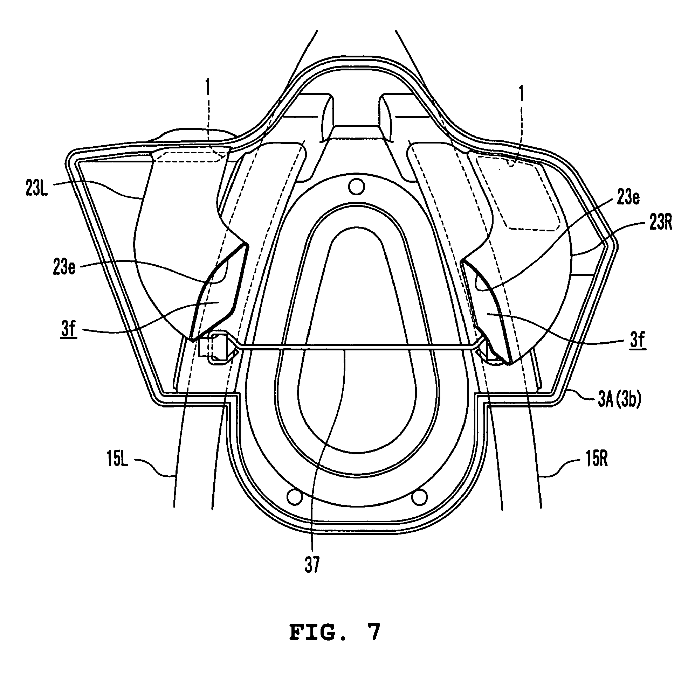

FIG. 6 is a sectional view of the air cleaner 10 as viewed from the left side. FIG. 7 is an elevational view of the air cleaner 10 from above with its second case member 3B detached. As shown in FIGs. 6 and 7, the air cleaner 10 has the air cleaner case 3 and the element 6 disposed inside the air cleaner case 3. The element 6 is attached inside the air cleaner case 3. The air cleaner case 3 includes a first case member 3A, a second case member 3B, and two ducts 23L, 23R.

As shown in FIG. 6, the first case member 3A includes a lower section 3a and an upper section 3b. The second case member 3B covers the first case member 3A from above and is detachably attached to the first case member 3A. The first case member 3A and the second case member 3B form an inner space 3d in the air cleaner case 3 that temporarily reserves air and passes it toward the intake pipe 5.

As shown in FIG. 7, in the upper section 3b of the first case member 3A, the ducts 23L, 23R are formed to fluidly connect the outside and the inner space 3d. The duct 23L disposed in the left side and the duct 23R disposed in the right side are formed generally symmetrically in the lateral direction. The ducts 23L, 23R respectively pass through a front face of the upper section 3b from front to rear and extend laterally inward in the inner space 3d to open toward a central direction. At each front end of the two ducts 23L, 23R, an inlet 1 is formed. At each rear end, an opening 23e is formed. Inflow passages 3f for introducing the outside air to the inner space 3d are respectively formed in the two ducts 23L, 23R.

As shown in FIG. 6, the lower section 3a of the first case member 3A which forms a part of the inner space 3d has a bottom 8. An outlet 2 for ejecting air out of the inner space 3d is formed in the bottom 8. The intake pipe 5 for supplying air to the cylinder 9 is connected to the inlet 5. An intake opening 4 is formed in the intake pipe 5 to open upward or obliquely upward in the inner space 3d. The intake pipe 5 extends above the bottom 8 in the inner space 3d. Accordingly, the intake opening 4 is positioned above the bottom 8. At the bottom 8, a drainage section (not shown) is formed for discharging water when the water by the rainfall or the like collects on the bottom 8.

In the second embodiment, the element 6 is formed in a bowl shape. Specifically, the element 6 includes a bowl-shaped main element 6a and a bowl-shaped auxiliary element 6b, which is separate from the main element 6a. Both the main element 6a and the auxiliary element 6b are disposed in the inner space 3d. The element 6 divides the inner space 3d, which is at least a part of the inside of the air cleaner case 3, into upper and lower spaces. More specifically, the element 6 divides the inner space 3d into a dirty-side chamber 21 positioned above the main element 6a and a clean-side chamber 22 positioned below the auxiliary element 6b.

The main element 6a is disposed above the intake opening 4 and supported by the upper section 3b of the first case member 3A. The auxiliary element 6b is disposed above the intake opening 4 and below the main element 6a, and supported by the upper section 3b of the first case member 3A. In the second embodiment also, the main element 6a is constructed to be detachable from the upper section 3b in the first case member 3A with the auxiliary element 6b remaining fixed in the inner space 3d.

In the second embodiment also, the main element 6a has a finer element than the auxiliary element 6b has. In other words, the auxiliary element 6b has a coarser element than the main element 6a has. However, the main element 6a and the auxiliary element 6b may have an element of the same fineness. Further, the main element 6a may have a coarser element than the auxiliary element 6b has.

In the second embodiment also, a flameproof net 7 is disposed below the auxiliary element 6b.

As shown FIG. 7, in the second embodiment, a detachable fixing member 37 is provided above the main element 6a. In the second embodiment, the main element 6a is pressed downward by the fixing member 37. In FIG. 6, the fixing member 37 is not shown.

In the second embodiment also, with the above construction, the outside air taken from the inlets 1 into the ducts 23L, 23R is introduced to an upper portion (dirty-side chamber 21) in the inner space 3d through the inflow passages 3f. The air further flows from top to bottom (from the dirty-side chamber 21 to the clean-side chamber 22) in the inner space 3d. At this time, the air passes through the main element 6a and the auxiliary element 6b. Dust and the like in the air are captured by the main element 6a as the air passes through the main element 6a. As a result, the air is purified. In the second embodiment also, the auxiliary element 6b has a coarser element than the main element 6a has. Therefore, dust and the like are mostly captured by the main element 6a but are hardly captured by the auxiliary element 6b. Thus, the air passed through the element 6 flows into the intake pipe 5 through the intake opening 4. The air is then supplied to the cylinder 9 in the engine 11 through the intake pipe 5.

As described above, also in the air cleaner 10 according to the second embodiment, the main element 6a and the auxiliary element 6b, which is separate from the main element 6a, are provided. The main element 6a is constructed to be detachable from the air cleaner case 3 with the auxiliary element 6b remaining fixed in the air cleaner case 3. Therefore, according to the air cleaner 10, even if foreign matters attached on the main element 6a fall off when the main element 6a is detached for maintenance, the foreign matters are captured by the auxiliary element 6b. Thus, it is possible to prevent foreign matters from falling into the intake pipe 5 through the intake opening 4 during the maintenance. As a result, according to the air cleaner 10, the maintenance work can be facilitated even though the intake opening 4 opens upward or obliquely upward in the air cleaner 10.

In addition, the element 6 of the air cleaner 10 according to the second embodiment is formed in a bowl shape. Accordingly, the surface area of the element 6 can be increased. Therefore, according to the air cleaner 10, a period of maintenance of the element 6 can be extended. Extension of the period of maintenance reduces detachment frequencies of the element 6. This further reduces the possibility that foreign matters fall into the intake pipe 5.

In the second embodiment, all the main element 6a, the auxiliary element 6b and the flameproof net 7 are formed in a bowl shape. However, only the main element 6a may be formed in a bowl shape. The main element 6a has a finer element than the auxiliary element 6b has. Accordingly, dust so sized as to be captured by the auxiliary element 6b is mostly captured by the main element 6a. In other words, air purification is mainly performed by the main element 6a. Thus, even if only the main element 6a is formed in a bowl shape, the surface area of the main element 6a, which purifies air, can be increased. Accordingly, a period of maintenance of the element 6 can be extended. This reduces detachment frequencies of the main element 6a and thereby achieves an effect similar to that described above in which the possibility of the foreign matters falling into the intake pipe 5 can be further reduced.

### Third Embodiment

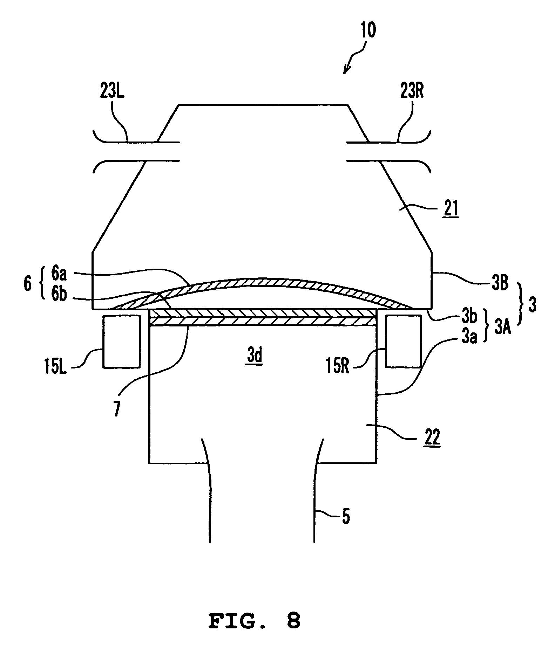

FIG. 8 is a sectional view schematically showing an air cleaner 10 according to a third embodiment. As shown in FIG. 8, in the third embodiment, the main element 6a, which is formed in a flat plate in the first embodiment, is formed in a curved plate. Other constitution than the above is similar to the first embodiment and the description thereof will be omitted.

As described above, in the air cleaner 10 according to the third embodiment, the main element 6a is formed in a curved plate. Accordingly, the surface area of the element 6a can be increased. In the third embodiment also, the main element 6a has a finer element than the auxiliary element 6b has. Accordingly, dust so sized as to be captured by the auxiliary element 6b is mostly captured by the main element 6a. In other words, air purification is mainly performed by the main element 6a. Therefore, even if only the main element 6a is formed in a curved plate while the auxiliary element 6b is formed in a flat plate, the surface area of the main element 6a which mainly performs air purification increases, resulting in an extended period of maintenance of the element 6. This reduces detachment frequencies of the main element 6a and thereby reduces the possibility of the foreign matters falling into the intake pipe 5.

In the third embodiment, only the main element 6a is formed in a curved plate. However, it is a matter of course that either one of or both of the auxiliary element 6b and the flameproof net 7 are formed in a curved plate.

In the third embodiment also, the main element 6a and the auxiliary element 6b may have an element of the same fineness. Further, the main element 6a may have a coarser element than the auxiliary element 6b has.

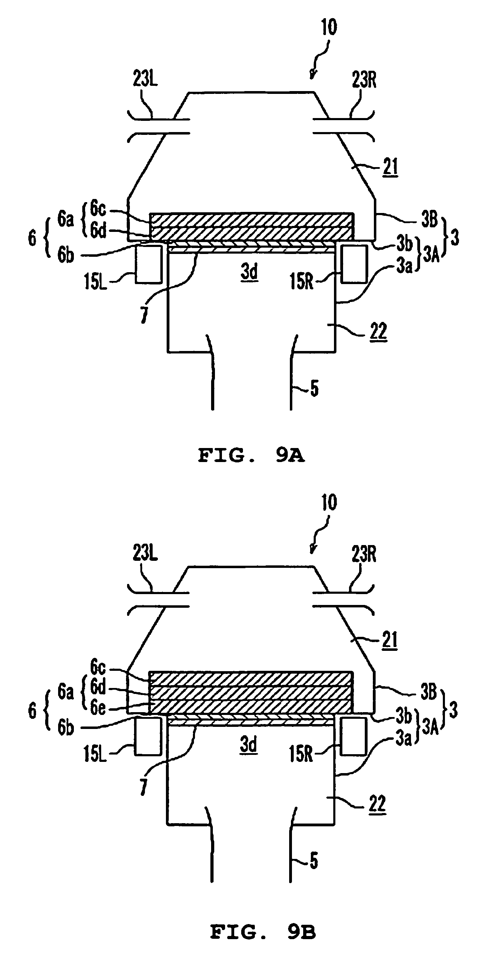

In each of embodiments described above, the main element 6a is configured by a single element member (single-layered configuration). However, the main element 6a may be multi-layered. Specifically, as shown in FIG. 9 (a), the main element 6a may be double-layered in which a first element 6c and a second element 6d having a finer element than the first element 6c has are provided. As shown in FIG. 9(b), the main element 6a may be triple-layered in which a first element 6c, a second element 6d having a finer element than the first element 6c has, and a third element 6e having a finer element than the second element 6d has are provided. Further, the main element 6a may have more layers. Thus, the element is configured such that a plurality of elements are layered so that a downstream side element has a finer element. This improves air purification performance. In the multi-layered configuration described above, it is preferable that elements constituting the respective layers can be integrally replaced.

As described above, the present invention is useful to an air cleaner for a vehicle and a motorcycle having the air cleaner.

### Description of Reference Numerals and Symbols

- 1:: inlet
- 2:: outlet
- 3:: air cleaner case
- 3A:: first case member
- 3B:: second case member
- 3d:: inner space
- 4:: intake opening
- 5:: intake pipe
- 6:: element
- 6a:: main element
- 6b:: auxiliary element
- 8:: bottom
- 8a:: drainage section
- 9:: cylinder
- 10:: air cleaner
- 11:: engine
- 12:: exhaust pipe
- 13:: pressing member
- 20:: motorcycle
- 21:: dirty-side chamber
- 22:: clean-side chamber
- 23L:: duct
- 23R:: duct

## Claims

1. An air cleaner (10) for a vehicle (20) comprising:
an air cleaner case (3) defining an inlet (1) and an outlet (2), the outlet (2) adapted to be connected to an intake pipe (5) having an intake opening (4) that opens upward or obliquely upward toward an inner space (3d) of the air cleaner case (3);
a main element (6a) attached inside the air cleaner case (3) to be positioned above the intake opening (4);
an auxiliary element (6b) attached inside the air cleaner case (3) to be positioned above the intake opening (4) and below the main element (6a), and
a pressing member (13) for pressing the main element (6a), wherein
the main element (6a) is detachable from the air cleaner case (3) independently of the auxiliary element (6b)and the pressing member (13) is disposed above at least part of the main element (6a).

2. The air cleaner (10) according to Claim 1, wherein the main element (6a) has a finer element than the auxiliary element (6b).

3. The air cleaner (10) according to Claim 1 or 2, wherein at least the main element (6a) is formed in a curved plate or in a bowl shape.

4. The air cleaner (10) according to Claim 1, 2 or 3, wherein the air cleaner case (3) has a bottom (8) on which the outlet (2) is formed, and the outlet (2) is arranged to be connected to the intake pipe (5) such that the intake pipe (5) extends upward above the bottom (8) of the air cleaner case (3).

5. A vehicle (20) comprising an air cleaner (10) according to any preceding Claim.

6. The vehicle (20) according to Claim 5, wherein the air cleaner case (3) has a bottom (8) on which the outlet (2) is formed, and the intake pipe (5) extends upward above the bottom (8) in the air cleaner case (3).

7. The vehicle (20) according to Claim 5 or 6, further comprising an engine (11) having a cylinder (9), wherein the intake pipe (50) extends between the cylinder (9) and the air cleaner case (3).

8. The vehicle (20) according to Claim 7, wherein the intake pipe (5) extends obliquely upward from the cylinder (9) to the air cleaner case (3).

9. The vehicle (20) according to Claim 7 or 8 further comprising an exhaust pipe (12) that extends rearward or obliquely rearward from the rear side of the cylinder (9) in the side view, wherein the cylinder (9) extends upward or obliquely upward rearward in the side view and the intake pipe (5) extends forward or obliquely forward from the front side of the cylinder (9) in the side view.

10. The vehicle (20) according to any one of Claims 5 to 9, wherein the vehicle (20) is a motorcycle.

11. The vehicle (20) according to any one of Claims 5 to 10, wherein the vehicle (20) is an off-road type.

## Patentansprüche

1. Luftfilter (10) für ein Fahrzeug (20), der aufweist:
ein Luftfiltergehäuse (3), das einen Eintritt (1) und einen Austritt (2) definiert, wobei der Austritt (2) so ausgebildet ist, dass er mit einem Ansaugrohr (5) mit einer Ansaugöffnung (4) verbunden wird, die sich nach oben oder schräg nach oben in Richtung eines Innenraumes (3d) des Luftfiltergehäuses (3) öffnet;
ein Hauptelement (6a), das innerhalb des Luftfiltergehäuses (3) angebracht ist, so dass es über der Ansaugöffnung (4) positioniert ist;
ein Hilfselement (6b), das innerhalb des Luftfiltergehäuses (3) angebracht ist, damit es über der Ansaugöffnung (4) und unterhalb des Hauptelementes (6a) positioniert ist; und
ein Presselement (13) für das Pressen des Hauptelementes (6a), wobei das Hauptelement (6a) unabhängig vom Hilfselement (6b) vom Luftfiltergehäuse (3) abnehmbar ist, und wobei das Presselement (13) oberhalb mindestens eines Teils des Hauptelementes (6a) angeordnet ist.

2. Luftfilter (10) nach Anspruch 1, bei dem das Hauptelement (6a) ein feineres Element aufweist als das Hilfselement (6b).

3. Luftfilter (10) nach Anspruch 1 oder 2, bei dem mindestens das Hauptelement (6a) zu einer gewölbten Platte oder in einer Schüsselform ausgebildet ist.

4. Luftfilter (10) nach Anspruch 1, 2 oder 3, bei dem das Luftfiltergehäuse (3) einen Boden (8) aufweist, in dem der Austritt (2) ausgebildet ist, und wobei der Austritt (2) so angeordnet ist, dass er mit dem Ansaugrohr (5) verbunden wird, so dass sich das Ansaugrohr (5) nach oben über den Boden (8) des Luftfiltergehäuses (3) erstreckt.

5. Fahrzeug (20), das einen Luftfilter (10) nach einem der vorhergehenden Ansprüche aufweist.

6. Fahrzeug (20) nach Anspruch 5, bei dem das Luftfiltergehäuse (3) einen Boden (8) aufweist, in dem der Austritt (2) ausgebildet ist, und wobei sich das Ansaugrohr (5) nach oben über den Boden (8) im Luftfiltergehäuse (3) erstreckt.

7. Fahrzeug (20) nach Anspruch 5 oder 6, das außerdem einen Motor (11) mit einem Zylinder (9) aufweist, bei dem sich das Ansaugrohr (5) zwischen dem Zylinder (9) und dem Luftfiltergehäuse (3) erstreckt.

8. Fahrzeug (20) nach Anspruch 7, bei dem sich das Ansaugrohr (5) schräg nach oben vom Zylinder (9) zum Luftfiltergehäuse (3) erstreckt.

9. Fahrzeug (20) nach Anspruch 7 oder 8, das außerdem ein Auspuffrohr (12) aufweist, das sich nach hinten oder schräg nach hinten von der Hinterseite des Zylinders (9) in der Seitenansicht erstreckt, wobei sich der Zylinder (9) nach oben oder schräg nach oben nach hinten in der Seitenansicht erstreckt, und wobei sich das Ansaugrohr (5) nach vom oder schräg nach vom von der Vorderseite des Zylinders (9) in der Seitenansicht erstreckt.

10. Fahrzeug (20) nach einem der Ansprüche 5 bis 9, bei dem das Fahrzeug (20) ein Motorrad ist.

11. Fahrzeug (20) nach einem der Ansprüche 5 bis 10, bei dem das Fahrzeug (20) ein Geländefahrzeug ist.

## Revendications

1. Filtre à air (10) pour un véhicule (20), comprenant :
un boîtier de filtre à air (3), définissant une entrée (1) et une sortie (2), la sortie (2) étant adaptée pour être connectée à un tuyau d'admission (5), comportant une ouverture d'admission (4) ouverte vers le haut ou de manière oblique vers le haut, en direction d'un espace interne (3d) du boîtier du filtre à air (3) ;
un élément principal (6a) fixé à l'intérieur du boîtier du filtre à air (3), pour être positionné au-dessus de l'ouverture d'admission (4) ;
un élément auxiliaire (6b) fixé à l'intérieur du boîtier du filtre à air (3), pour être positionné au-dessus de l'ouverture d'admission (4) et au-dessous de l'élément principal (6a) ; et
un élément de pression (13) pour exercer une pression sur l'élément principal (6a), dans lequel
l'élément principal (6a) peut être détaché du boîtier du filtre à air (3) de manière indépendante de l'élément auxiliaire (6b), l'élément de pression (13) étant agencé au-dessus d'au moins une partie de l'élément principal (6a).

2. Filtre à air (10) selon la revendication 1, dans lequel l'élément principal (6a) comporte un élément plus fin que l'élément auxiliaire (6b).

3. Filtre à air (10) selon les revendications 1 ou 2, dans lequel au moins l'élément principal (6a) est formé en une plaque courbée ou en une forme en bol.

4. Filtre à air (10) selon les revendications 1, 2 ou 3, dans lequel le boîtier du filtre à air (3) comporte un fond (8), sur lequel est formée la sortie (2), la sortie (2) étant agencée de sorte à être connectée au tuyau d'admission (5), de sorte que le tuyau d'admission (5) s'étend vers le haut au-dessus du fond (8) du boîtier du filtre à air (3).

5. Véhicule (20) comprenant un filtre à air (10) selon l'une quelconque des revendications précédentes.

6. Véhicule (20) selon la revendication 5, dans lequel le boîtier du filtre à air (3) comporte un fond (8), sur lequel est formée la sortie (2), le tuyau d'admission (5) s'étendant vers le haut au-dessus du fond (8) dans le boîtier du filtre à air (3).

7. Véhicule (20) selon les revendications 5 ou 6, comprenant en outre un moteur (11), comportant un cylindre (9), le tuyau d'admission (5) s'étendant entre le cylindre (9) et le boîtier du filtre à air (3).

8. Véhicule (20) selon la revendication 7, dans lequel le tuyau d'admission (5) s'étend de manière oblique vers le haut, du cylindre (9) vers le boîtier du filtre à air (3).

9. Véhicule (20) selon les revendications 7 ou 8, comprenant en outre un tuyau d'échappement (12), s'étendant vers l'arrière ou de manière oblique vers l'arrière à partir du côté arrière du cylindre (9), dans une vue latérale, le cylindre (9) s'étendant vers le haut ou de manière oblique vers le haut, vers l'arrière dans la vue latérale, le tuyau d'admission (5) s'étendant vers l'avant ou de manière oblique vers l'avant à partir du côté avant du cylindre (9) dans la vue latérale.

10. Véhicule (20) selon l'une quelconque des revendications 5 à 9, dans lequel le véhicule (20) est un motocycle.

11. Véhicule (20) selon l'une quelconque des revendications 5 à 10, dans lequel le véhicule (20) est du type tout terrain.
